# EUROPEAN PATENT SPECIFICATION

(11) **EP 1 167 150 B1**
(45) Date of publication and mention of the grant of the patent: **14.04.2004**
(21) Application number: 01305201.4
(22) Date of filing: 14.06.2001
(51) Int. Cl.: B60T 13/58, F02M 65/00, F02M 57/00

(54) **A pressure intensifier**
Druckbooster
Multiplicateur de pression

(30) Priority: 23.06.2000 GB 0015305
(43) Date of publication of application: 02.01.2002
(73) Proprietor: Assembly Technology & Test Limited, London EC3A 7NJ (GB)
(72) Inventor: Jackson, David, Buckingham MK18 1AW (GB)
(74) Representative: Crouch, David John

(56) References cited:
- EP-A- 1 197 668
- FR-A- 1 216 088
- FR-A- 2 762 568
- US-A- 4 041 778

## Description

The present invention relates to a pressure intensifier having movable means which communicate a force applied by the pressure of fluid in a first cavity of the intensifier to fluid in a second cavity of the intensifier, the component of the area of the movable means to which the pressure of the fluid in the first cavity is applied to urge the movable means to move towards the second cavity being substantially greater than the component of the area of the movable means which applies a force to the fluid in the second cavity, so that the pressure of fluid in the second cavity created as a result of the force applied to the movable means by the pressure of fluid in the first cavity is substantially greater than the latter pressure.

Such a pressure intensifier is embodied in a standard hydraulic amplifier of pressure and is used in many applications today, for example in hydraulic brake systems of motor vehicles. An example is given in document FR-A-2762568.

However, even with such a relatively inexpensive pressure intensifier, it is difficult to use it in rather more specialised applications, such as in developing a required pressure sufficiently rapidly to test a high pressure fuel injector, as is currently used in motor vehicles. One of the problems encountered is in the time it takes to build up the pressure in the said first cavity, making it difficult to reach the required pressure quickly enough to testing the injector.

The present invention seeks to provide a remedy.

Accordingly, the present invention is directed to a pressure intensifier having the construction set out in the opening paragraph of the present specification, in which the pressure intensifier is provided with a clamp arranged to hold the movable means stationary whilst pressure is built up in the said first cavity, which clamp is releasable once such pressure has been built up, to avoid movement of the movable means whilst pressure is built up in the said first cavity.

An advantage of such a construction is that there is no time delay in building up pressure through valves or other devices in reaching the full pressure in the said second cavity.

A further advantage of such a construction is that it can be made from relatively inexpensive devices, such as an adapted commercial vehicle brake actuator coupled to an ordinary hand pump, for example, to develop a pressure which can be used to provide a clamping force.

Advantageously, part of the movable means comprise a diaphragm, one side of which defines a boundary of the said first cavity. This enables a higher ratio to be achieved between the pressures in the said first and second cavities.

The fluid in the first cavity may be air, so that the said first cavity may be connected to a supply of pressurised air.

The pressure intensifier may comprise a vehicle brake actuator. This enables it to be made at relatively low expense, since a vehicle brake actuator is a readily available part, although it will be appreciated that modifications are required to give it a construction which embodies the present invention.

The clamp may comprise a flexible sleeve. This achieves a high efficiency of clamping force for a given pressure applied to the sleeve.

To this end, a source of hydraulic pressure may be connected to apply hydraulic pressure to the sleeve.

The source of hydraulic pressure may comprise a hand/foot/air operated injector tester. This again provides the benefit of using relatively inexpensive readily available equipment to put a preferred embodiment of the invention into effect.

The intensifier may further be provided with rate of displacement measurement means arranged to measure the rate of displacement of the movable means. The rate of displacement measurement means may comprise an induction coil and magnet, the coil or the magnet being connected to the movement means.

The said second cavity may be openable into communication with a fuel injector test head, so that the pressure intensifier is adapted to enable tests to be carried out on a fuel injector.

The present invention is also directed to fuel injector test equipment incorporating a pressure intensifier made in accordance with the present invention.

An example of a pressure intensifier made in accordance with the present invention is illustrated in the accompanying drawings, in which:
- Figure 1: is an axial sectional view through the example of intensifier; and
- Figure 2: is a pneumatic/hydraulic circuit diagram of fuel injector test equipment incorporating the pressure intensifier shown in Figure 1.

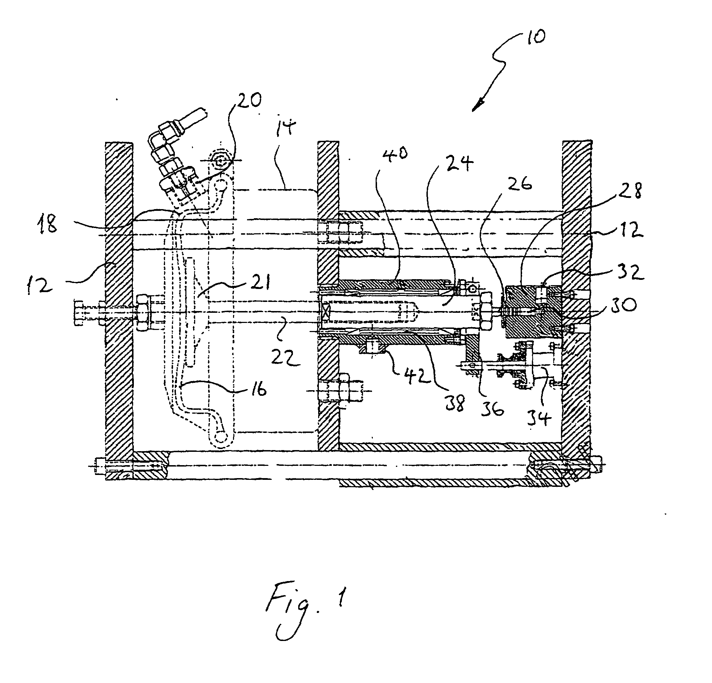

With reference to Figure 1, a pressure intensifier in the form of a low inertia, low friction vehicle brake actuator 10 is shown modified in accordance with the present invention to enable high pressure fuel injectors to be tested. The actuator comprises a frame 12, at one end of which is mounted a diaphragm cylinder 14 across which extends a diaphragm 16, on an outer side of which is defined a first cavity 18. The cylinder 14 is provided with a port 20 on that side of the cylinder 16 to enable pressurised air to be passed into the said first cavity 18, and also to enable air to flow out from that cavity. The diaphragm 16 is in contact with a flange 21 at an outer end of a plunger rod 22. The other end of that rod 22 is received in a piston 24 abutting but not connected to a plunger 26 which is received within a cylindrical hollow of a cylinder block 28 defining a second cavity 30 therewithin. The latter is connected to an inlet and outlet port 32.

The effective diameter of the diaphragm 16 is approximately 150mm. The diameter of the plunger 26 is about 6mm and the cylindrical block 28 accommodates a travel for the plunger 26 of about 6mm. The pressure intensifier 10 therefore has an intensifying ratio of approximately 600:1.

Any linear axial movement of the piston 24 is detectable by a magnet and inductor coil sensor 34, the magnet part of which is fixed to the piston 24 by a connector 36. This enables measurement of the rate of displacement of the piston 24. The voltage induced in the coil is proportional to the velocity of plunger movement, which in turn is directly proportional to the flow rate of fluid from the said second cavity 30.

The plunger 26 can be moved its full distance of travel in approximately 0.0005 seconds, providing a flow rate of approximately 2.04 litres per minute.

A metallic flexible sleeve 38 is sandwiched between the piston 24 and a guide 40 therefor, the interior of the guide 40 being provided with a port 42 to enable hydraulic pressure to be applied to the outside of the sleeve 38 and inhibit movement of the piston 24.

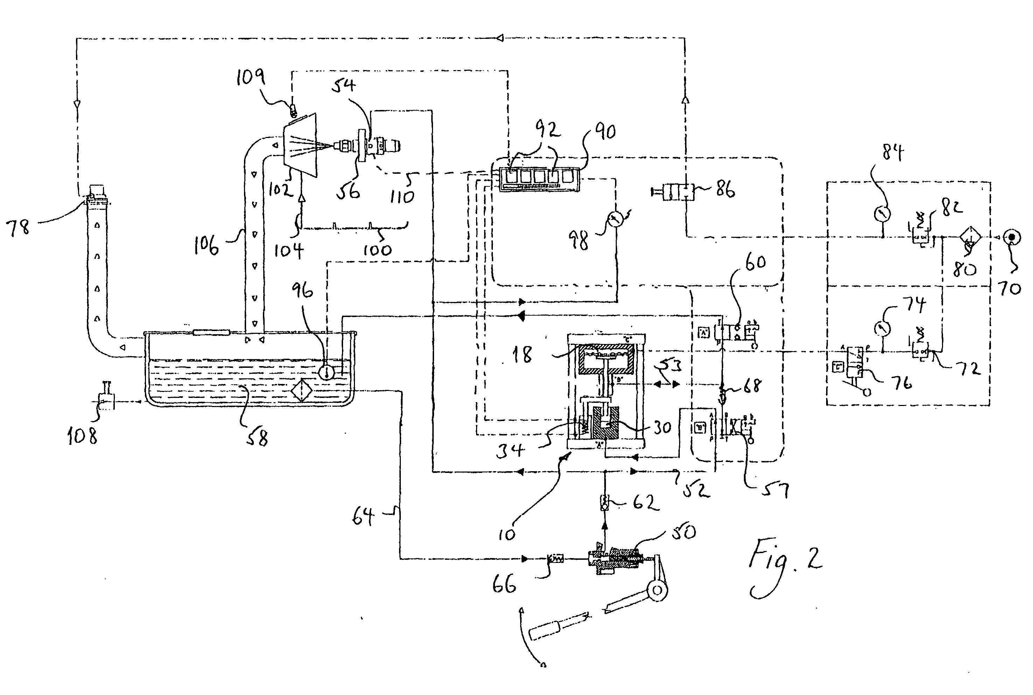

The pressure intensifier shown in Figure 1 may be used in fuel injector testing equipment as shown in Figure 2. This shows the intensifier 10 connected to a hand operated injector tester constituting an hydraulic hand pump 50 which is selectively connectable either to a line 52 which connects the said second cavity 30 of the intensifier 10 to an injector 54 under test held in an injector head 56, or alternatively to the exterior of the sleeve 38 on the inside of the guide 40 via a line 53. These alternative connections are selective by means of a 4-port 2-position hand operated slide valve 57 which can be slid between two positions, the first one of which connects the said second cavity 30 to the injector 54, and the second one of which connects the pump 50 to the line 53. The line 53 is also connected to a reservoir 58 via a slideable open/shut hand operated lock release valve 6C.

A non-return valve 62 is connected between the pump 50 and the line 52 to inhibit the return of hydraulic fluid from the line 52 to the pump 50.

A line 64 connects the reservoir 58 to the pump 50, and a non-return valve 66 in the line 64 prevents fluid in the line 64 returning from the pump 50 to the reservoir 58.

A non-return valve 68 prevents fluid from the line 53 being able to pass back towards the valve 57.

An air pressure source 70 is connected to said first cavity 18 of the pressure intensifier 10 via a pressure regulator 72, a pressure gauge 74, and an air pressure enable/release valve 76 connected in series in that order from the pressure source 70 to the intensifier 10. The pressure source 70 is also connected to an air outlet end 78 of the reservoir 58 via a water trap filter 80, a pressure regulator 82, a pressure gauge 84, and an air mover control valve 86 connected in series in that order from the air pressure source 70 to the air mover 78.

A processor 90 has an LCD display 92. The processor 90 is connected to receive signals from a thermometer 96 in the reservoir 58, the rate of displacement transducer 34 and an injected-pressure sensor 98.

A tool tray 100 is connected to receive test fluid from a spray collector 102 via a tool tray drain 104. A conduit 106 directs spray collected from che injector 54 and returns it to the reservoir 58. Lastly, the air mover 78 and a reservoir drain 108 are connected to the reservoir 58.

A light bulb 109 is positioned adjacent to the spray collector 102 to facilitate assessment of the spray pattern.

When the system shown in Figures 1 and 2 is in operation, the valve 57 is positioned to enable fluid from the hand pump 50 to be applied to the said second cavity 30, as well as to the injector 54 under test. This ensures that the piston 24 is in its fully retracted position as shown in Figure 1 and that the hydraulic fluid in the line 52 is under pressure. During this time, the hand pump 50 is operated to ensure such a pressure.

At this stage, the lock release valve 60 is in the open position to ensure that there is no clamping force exerted on the piston 24 by the sleeve 38. Also, the air pressure enable/release valve 76 is in a first position in which air can be vented from the said first cavity 18, again to enable the piston 24 to return to its start position as shown in Figure 1.

Once this has been achieved valve 60 is closed to prevent fluid from line 53 passing to the reservoir 58. The valve 57 is then switched to its second position in which pressure is applied to the sleeve 38 by the hand pump 50 so as to urge the sleeve 38 against the piston 24 and lock it in position.

The valve 76 is now switched to open the pressure or air from the source 70 to the said first cavity 18, as a result of which pressure in that cavity is built-up. At this stage, however, the piston 24 cannot move because it is clamped in place by the sleeve 38.

At the next stage, the valve 57 is switched once more to put the second cavity into communication with the injector 54 under test. The last step in this cycle involves the switching of the lock release valve 60 so as to release the pressure holding the sleeve 38 against the piston 24. The piston is suddenly free to move under the force of pressure in the said first cavity 18 to very rapidly build up the pressure in the said second cavity 30 and thence to the injector under test 54. A signal from the processor 90 may be applied to the injector 54, in the event that the latter is electrically operated, via the line 110 to enable an injection of the test fluid through the injector 54. However, the rate of increase of injected pressure is sufficiently great, because of the action of the sleeve 38, that an injector 54 that is not operated electrically can be readily opened and tested. The peak pressure or pressures as measured by the pressure sensor 98 are displayed on the LCD display 92. A check is also made on the flow rate as determined by the processor 90 from the signal it receives from the rate of displacement transducer 34. The test fluid passes back through the conduit 106 to the reservoir 54.

The foregoing cycle is repeated until sufficient data has been obtained, which may be stored in a memory (not shown) within the processor 90.

The illustrated pressure intensifier is capable of providing high pressure fluid (in excess of 700 bar). For example, an air pressure of about 2.5 bar applied to che diaphragm 16 generates an injected pressure of about 1500 bar. A high flow rate of the order 2 litres per minute can be achieved.

Numerous variations and modifications to the illustrated apparatus may occur to the reader without taking the resulting construction outside the scope of the present invention. To give one example only, a suitably modified air bellows piston arrangement could be used for the intensifier instead of a vehicle brake actuator. The fuel injector illustrated in Figure 2 may be a multi-stage diesel injector.

## Claims

1. A pressure intensifier (10) having movable means (16, 21, 22, 24) which communicate a force applied by the pressure of fluid in a first cavity (18) of the intensifier (10) to fluid in a second cavity (30) of the intensifier (10), the component of the area of the movable means (16, 21, 22, 24) to which the pressure of the fluid in the first cavity (18) is applied to urge the movable means (16, 21, 22, 24) to move towards the second cavity (30) being substantially greater than the component of the area of the movable means (16, 21, 22, 24) which applies a force to the fluid in the second cavity (30), so that the pressure of fluid in the second cavity (30) created as a result of the force applied to the movable means (16, 21, 22, 24) by the pressure of fluid in the first cavity (18) is substantially greater than the latter pressure, **characterised in that** the pressure intensifier (10) is provided with a clamp (38) arranged to hold the movable means (16, 21, 22, 24) stationary whilst pressure is built up in the said first cavity (18), which clamp (38) is releasable once such pressure has been built up, to avoid movement of the movable means (16, 21, 22, 24) whilst pressure is built up in the said first cavity (18).

2. A pressure intensifier according to claim 1, **characterised in that** at least a part of the movable means (16) comprises a diaphragm (16), one side of which defines a boundary of the said first cavity (18).

3. A pressure intensifier according to claim 1 or claim 2, **characterised in that** the fluid in the first cavity (18) is air, the said first cavity (18) being connected to a supply of pressurised air (70).

4. A pressure intensifier according to any preceding claim, **characterised in that** it comprises a vehicle brake actuator (10).

5. A pressure intensifier according to any prececing claim, **characterised in that** the clamp (38) comprises a flexible sleeve (38).

6. A pressure intensifier according to claim 5, **characterised in that** a source (50) of hydraulic pressure is connected to apply hydraulic pressure to the sleeve (38).

7. A pressure intensifier according to claim 6, **characterised in that** the source (50) of hydraulic pressure comprises a hand/foot/air operated injector tester (50).

8. A pressure intensifier according to any preceding claim, **characterised in that** the intensifier (10) is provided with rate of displacement measurement means (34) arranged to measure the rate of displacement of the movable means (16, 21, 22, 24).

9. A pressure intensifier according to claim 8, **characterised in that** the rate of displacement measurement means (34) comprises an induction coil and magnet, the coil or the magnet being connected to the movable means (24).

10. A pressure intensifier according to any preceding claim, **characterised in that** the said second cavity (30) is openable into communication with a fuel injector test head (56), so that the pressure intensifier (10) is adapted to enable tests to be carried out on a fuel injector (54).

11. Fuel injector test equipment incorporating a pressure intensifier as claimed in any preceding claim.

## Patentansprüche

1. Druckverstärker (10) mit (einem) beweglichen Element(en) (16,21,22,24), die eine durch den Fluiddruck in einem ersten Hohlraum (18) des Verstärkers (10) aufgebrachten Druck auf Fluid in einem zweiten Hohlraum (30) des Verstärkers (10) übertragen, wobei derjenige Teil der Fläche des/der beweglichen Elemente(s) (16,21,22,24) auf die der Fluiddruck im ersten Hohlraum (18) aufgebracht wird, um das/die bewegliche(n) Element(e) (16,21,22,24) in Richtung des zweiten Hohlraums (30) zu drücken, wesentlich größer als derjenige Teil der Fläche des/der beweglichen Elemente(s) (16,21,22,24) ist, der eine Kraft auf das Fluid im zweiten Hohlraum (30) aufbringt, so dass der Fluiddruck im zweiten Hohlraum (30), der infolge der vom Fluiddruck im ersten Hohlraum (18) auf das/die bewegliche(n) Element(e) (16,21,22,24) aufgebrachten Kraft erzeugt wird, wesentlich größer als der letztgenannte Druck ist, **dadurch gekennzeichnet, dass** der Druckverstärker (10) mit einer Halterung oder Klemmvorrichtung (38) ausgestattet ist, die so angeordnet ist, dass sie das/die bewegliche(n) Element(e) (16,21,22,24) unbeweglich hält, während sich der Druck im ersten Hohlraum (18) aufbaut, wobei die Halterung bzw. Klemmvorrichtung (38) lösbar ist, sobald sich ein solcher Druck aufgebaut hat, um Bewegungen des/der beweglichen Elemente(s) (16,21,22,24) zu vermeiden, während sich der Druck im ersten Hohlraum (18) aufbaut.

2. Druckverstärker nach Anspruch 1, **dadurch gekennzeichnet, dass** mindestens ein Teil des/der beweglichen Elemente(s) (16) ein Diaphragma (16) umfasst oder ist, dessen eine Seite eine Grenze des ersten Hohlraums (18) darstellt.

3. Druckverstärker nach Anspruch 1 oder Anspruch 2, **dadurch gekennzeichnet, dass** das Fluid im ersten Hohlraum (18) Luft ist, wobei der erste Hohlraum (18) an eine Luftdruckquelle (70) angeschlossen ist.

4. Druckverstärker nach einem der voranstehenden Ansprüche, **dadurch gekennzeichnet, dass** er ein Fahrzeugbremsen-Steuerelement (10) aufweist.

5. Druckverstärker nach einem der voranstehenden Ansprüche, **dadurch gekennzeichnet, dass** die Halterung bzw. Klemmvorrichtung (38) eine flexible Hülse oder Muffe (38) aufweist.

6. Druckverstärker nach Anspruch 5, **dadurch gekennzeichnet, dass** eine Quelle (50) für hydraulischen Druck angeschlossen ist, um hydraulischen Druck auf die Hülse oder Muffe (38) aufzubringen.

7. Druckverstärker nach Anspruch 6, **dadurch gekennzeichnet, dass** die Quelle (50) für hydraulischen Druck ein per Hand/Fuß/Luft betriebenes Einspritzventil-Prüfgerät (50) umfasst.

8. Druckverstärker nach einem der voranstehenden Ansprüche, **dadurch gekennzeichnet, dass** der Verstärker (10) mit einer Verschiebungsgrad-Messeinrichtung (34) ausgestattet ist, die angeordnet ist, um den Grad der Verschiebung des/der beweglichen Elemente(s) (16, 21, 22, 24) zu messen.

9. Druckverstärker nach Anspruch 8, **dadurch gekennzeichnet, dass** die Verschiebungsgrad-Messeinrichtung (34) eine Induktionsspule mit Magnet umfasst, wobei die Spule oder der Magnet mit dem/den beweglichen Element(en) (24) verbunden ist.

10. Druckverstärker nach einem der voranstehenden Ansprüche, **dadurch gekennzeichnet, dass** der zweite Hohlraum (30) so geöffnet werden kann, dass er in Verbindung mit einem Kraftstoffeinspritz-Prüfkopf (56) gelangt, derart, dass der Druckverstärker (10) die Möglichkeit liefert, Prüfungen an einem Kraftstoffeinspritzventil (54) vorzunehmen.

11. Kraftstoffeinspritzventil-Prüfeinrichtung, umfassend einen Druckverstärker nach einem der voranstehenden Ansprüche.

## Revendications

1. Un amplificateur de pression (10), comprenant des moyens mobiles (16, 21, 22, 24), qui communiquent une force, appliquée par la pression d'un fluide présent dans une première cavité (18) de l'amplificateur (10) à un fluide présent dans une deuxième cavité (30) de l'amplificateur (10), l'aire de la surface des moyens mobiles (16, 21, 22, 24), sur laquelle la pression du fluide présent dans la première cavité (18) est appliquée pour pousser les moyens mobiles (16, 21, 22, 24) à se déplacer vers la deuxième cavité (30), étant sensiblement supérieure à l'aire de la surface des moyens mobiles (16, 21, 22, 24) qui appliquent une force sur le fluide présent dans la deuxième cavité (30), de manière que la pression de fluide, présente dans la deuxième cavité (30), créée en résultat de la force appliquée aux moyens mobiles (16, 21, 22, 24) par la pression du fluide présent dans la première cavité (18), soit sensiblement supérieure à la pression dans cette dernière, **caractérisé en ce que** l'amplificateur de pression (10) est muni d'un dispositif de fixation (38), agencé pour maintenir les moyens mobiles (16, 21, 22, 24) de façon stationnaire, tandis qu'une pression est établie dans ladite première cavité (18), le dispositif de fixation (38) étant désolidarisable une fois qu'une telle pression a été établie, pour éviter tout déplacement des moyens mobiles (16, 21, 22, 24) tandis que la pression est établie dans ladite première cavité (18).

2. Un amplificateur de pression selon la revendication 1, **caractérisé en ce qu'**au moins une partie des moyens mobiles (16) comprend un diaphragme (16), dont une face définit une frontière de ladite première cavité (18).

3. Un amplificateur de pression selon la revendication 1 ou la revendication 2, **caractérisé en ce que** le fluide présent dans la première cavité (18) est de l'air, ladite première cavité (18) étant reliée à une alimentation en air comprimé (70).

4. Un amplificateur de pression selon l'une quelconque des revendications précédentes, **caractérisé en ce qu'**il comprend un actionneur de frein de véhicule (10).

5. Un amplificateur de pression selon l'une quelconque des revendications précédentes, **caractérisé en ce que** le dispositif de fixation (38) comprend une douille flexible (38).

6. Un amplificateur de pression selon la revendication 5, **caractérisé en ce qu'**une source (50) de pression hydraulique est reliée pour appliquer une pression hydraulique à la douille (38).

7. Un amplificateur de pression selon la revendication 6, **caractérisé en ce que** la source (50) de pression hydraulique comprend un testeur d'injecteur (50), actionné à la main/au pied/par de l'air.

8. Un amplificateur de pression selon l'une quelconque des revendications précédentes, **caractérisé en ce que** l'amplificateur (10) est muni de moyens de mesure de vitesse de déplacement (34), agencés pour mesurer la vitesse de déplacement des moyens mobiles (16, 21, 22, 24).

9. Un amplificateur de pression selon la revendication 8, **caractérisé en ce que** les moyens de mesure de vitesse de déplacement (34) comprennent une bobine d'induction et un aimant, la bobine ou l'aimant étant connecté(e) aux moyens mobiles (24).

10. Un amplificateur de pression selon l'une quelconque des revendications précédentes, **caractérisé en ce que** ladite deuxième cavité (30) est susceptible d'être ouverte pour être mise en communication avec une tête de test d'injecteur de carburant (56), de manière que l'amplificateur de pression (10) soit adapté pour permettre d'effectuer des tests sur un injecteur de carburant (54).

11. Équipement de test d'injecteur de carburant, incorporant un amplificateur de pression tel qu'indiqué à l'une quelconque des revendications précédentes.
